# EUROPÄISCHE PATENTSCHRIFT

(11) **EP 1 344 446 B1**
(45) Veröffentlichungstag und Bekanntmachung des Hinweises auf die Patenterteilung: **19.12.2007**
(21) Anmeldenummer: 03100357.7
(22) Anmeldetag: 17.02.2003
(51) Int. Cl.: A01D 43/073

(54) **Austrageinrichtung einer landwirtschaftlichen Erntemaschine**
Discharging device of an agricultural harvesting machine
Dispositif de décharge d'une récolteuse agricole

(30) Priorität: 16.03.2002 DE 10211706
(43) Veröffentlichungstag der Anmeldung: 17.09.2003
(73) Patentinhaber: DEERE & COMPANY, Moline, Illinois 61265-8098 (US)
(72) Erfinder: Großjohann, Harald, 66482 Zweibrücken (DE); Bissen, Laurent, 9775 Weicherdange (LU)
(74) Vertreter: Holst, Sönke

(56) Entgegenhaltungen:
- EP-A- 1 275 290
- DE-A- 2 707 394
- DE-C- 3 544 166
- DE-U- 8 606 709
- US-A- 5 953 892

## Beschreibung

Die Erfindung betrifft einen Feldhäcksler mit einer Erntegutaufnahmevorrichtung, einer Häckseltrommel und einer Austrageinrichtung, über die im Betrieb mittels der Häckseltrommel gehäckseltes Erntegut den Feldhäcksler zu einem nebenher fahrenden Transportfahrzeug verlässt und an deren Oberseite das gehäckselte Erntegut im Betrieb durch die Fliehkraft entlanggleitet.

Feldhäcksler sind Erntemaschinen, die Erntegut vom Boden aufnehmen, es häckseln und durch eine Austrageinrichtung auf einer Ablagefläche eines nebenher fahrenden oder vom Feldhäcksler gezogenen Transportfahrzeugs ablegen. Um das Transportfahrzeug kontrolliert befüllen zu können, ist die Auswurfrichtung durch ein Drehen der Austrageinrichtung um eine vertikale Achse veränderbar. Die Höhe des auslassseitigen Endes der Austrageinrichtung ist bei einigen Ausführungsformen ebenfalls verstellbar, indem die Austrageinrichtung um eine horizontale Achse verschwenkbar ist. Außerdem ist am auslassseitigen Ende der Austrageinrichtung eine verstellbare Klappe zur Vorgabe der Auswurfrichtung vorgesehen. Ein derartiger Feldhäcksler ist beispielsweise in der DE 101 19 279 A offenbart.

Bei relativ breiten Erntevorsätzen (Maisgebiss mit acht oder zehn Reihen Arbeitsbreite) oder beim Häckseln am Hang kommt es gelegentlich vor, dass der optimale Abstand zum nebenher fahrenden Transportfahrzeug nicht eingehalten werden kann. Oftmals ist der Abstand zwischen dem Feldhäcksler und dem Transportfahrzeug zu groß, so dass das Transportfahrzeug nur einseitig befüllt wird. Das kann zu Zeitverlusten in der Häckselkette führen, wenn das Transportfahrzeug zu früh gewechselt werden muss, weil es nicht weiter beladen werden kann. Außerdem kann es bei der Ablage des Häckselguts auf das Transportfahrzeug bei starkem Seitenwind zu Verlusten kommen, wenn die Klappe der Austrageinrichtung zu weit vom Hänger entfernt ist.

Zur Lösung dieser Probleme sind feste Verlängerungselemente bekannt, die endseitig an der Austrageinrichtung anbringbar sind. Sie haben allerdings den Nachteil, dass sie in vielen anderen Betriebsbedingungen, bei denen das Transportfahrzeug ohne sie näher am Feldhäcksler fahren würde, eher störend wirken.

Die US 2001/0026755 A schlägt einen Kornwagen mit einem Entladeschneckenförderer vor, an dessen äußerem Ende eine mittels eines Hydraulikzylinders teleskopierbare Verlängerung vorgesehen ist. Die Verlängerung wird selbsttätig ausgefahren, wenn der Entladeschneckenförderer in seine Betriebsstellung verbracht wird. Die teleskopierbare Verlängerung dient somit nur zum kompakteren Verstauen des Entladeschneckenförderers in seiner Außerbetriebsstellung. Derartige Entladeschneckenförderer werden auch an Mähdreschern verwendet (JP 09 172 854 A, JP 11 253 045 A, US 5 857 907 A).

Die DE 35 44 166 C beschreibt eine Röhre, die zwischen gelenkig miteinander verbundenen Fahrzeugen, wie zum Beispiel einer Austrittsöffnung eines an einem Traktor befestigten Mähwerks und der Eintrittsöffnung eines auf einem Anhänger angeordneten Mähgutsammelbehälters angeordnet ist. Die Röhre umfasst einen biegsamen, in der Länge elastisch verformbaren Schlauch. Außerdem sind zwischen dem Schlauch und dem Anhänger teleskopierbare Rohre angeordnet, deren Relativposition zur Anpassung an die Lenkbewegungen des Traktors gegenüber dem Anhänger vom horizontalen Winkel zwischen dem Traktor und dem Anhänger abhängt. Hier ist die Austrageinrichtung starr mit dem Traktor und dem Anhänger verbunden, so dass ihre Verwendung bei Feldhäckslern, die das Erntegut auf unabhängig vom Feldhäcksler fahrende Transportfahrzeuge überladen, nicht in Betracht kommt.

Schließlich beschreibt die nachveröffentlichte EP 1 275 290 A einen Feldhäcksler mit einem Auswurfkrümmer, dessen oberer, etwa horizontal verlaufender Abschnitt ein teleskopartig verlängerbares Rohrelement enthält, so dass durch ein Zug/Druck-Stellglied eine stufenlose Veränderung des Abstands zwischen der Übernahmestelle und der Abwurfstelle des Auswurfkrümmers eingeleitet werden kann. Wie das Stellglied betätigt wird, ist nicht offenbart.

Das der Erfindung zugrunde liegende Problem wird darin gesehen, eine verbesserte Austrageinrichtung bereitzustellen, bei der die erwähnten Nachteile nicht auftreten.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Feldhäcksler umfasst eine Erntgutaufnahmevorrichtung, eine Häckseltrommel und eine Austrageinrichtung für gehäckseltes Erntegut. Die Austrageinrichtung ist aus zwei Elementen aufgebaut. Ein erstes Element ist mit dem Feldhäcksler verbunden und ein zweites Element, welches das auslassseitige Ende der Austrageinrichtung enthält, ist während des Erntebetriebs relativ zum ersten Element in axialer Richtung teleskopierbar. Die Erfindung ist besonders sinnvoll am Feldhäcksler einsetzbar, da dort während des gesamten Erntevorgangs ein Transportfahrzeug befüllt wird. Außerdem kann die Austrageinrichtung auf relativ einfache Weise verlängert werden, da kein Förderer, wie er sich beispielsweise im Entladerohr eines Mähdreschers befindet, in der Austrageinrichtung vorgesehen ist.

Es ist ein fremdkraftbetätigter Aktor vorgesehen, mit dem das zweite Element gegenüber dem ersten Element verschiebbar ist. Dabei kann es sich um einen Elektromotor oder einen Hydraulikzylinder bzw. -motor handeln. Es besteht die Möglichkeit, den Aktor durch geeignete Eingabeeinrichtungen vom Arbeitsplatz des Bedieners aus durch manuelle Eingaben zu steuern. Die Eingabeeinrichtungen können Schalter im Multifunktionshandgriff, Schalter in der Bedienkonsole bzw. einen Fußschalter auf dem Kabinenboden umfassen. Andererseits können auch Sensoren eingesetzt werden, die die Position eines Transportfahrzeugs erfassen und den Aktor selbsttätig derart steuern, dass das Erntegut an der gewünschten Stelle abgelegt wird. Die Sensoren können das Transportfahrzeug optisch erfassen und den Aktor mittels einer Bildverarbeitungssoftware steuern. Auch eine optische bzw. akustische Messung von Entfernungen ist anwendbar. In einer anderen Ausführungsform weisen der Feldhäcksler und das Transportfahrzeug jeweils einen Positionssensor auf, z. B. einen GPS-Empfänger, deren Positionssignale zur selbsttätigen Ansteuerung des Aktors dienen.

Auf diese Weise wird die Länge der Austrageinrichtung veränderbar gemacht. Bei nebenher fahrenden Transportfahrzeugen in Form von Anhängern oder anderen Silowagen kann das auslassseitige Ende der Austrageinrichtung stets optimal über der Befüllfläche positioniert werden. Dadurch wird die Ladekapazität der Wagen optimal ausgenutzt. Wartezeiten können vermieden werden und die Häckselkette arbeitet kostengünstiger. Der Fahrer des Feldhäckslers und der Fahrer des Transportfahrzeugs werden entlastet, da nicht unbedingt ein fest vorgegebener Abstand zwischen dem Silowagen und dem Erntevorsatz eingehalten werden muss. Da der Abstand zwischen dem Feldhäcksler und dem Transportfahrzeug variierbar ist und hinreichend groß gewählt werden kann, ist die Gefahr einer Kollision zwischen dem Transportfahrzeug und insbesondere einem relativ breiten Erntevorsatz vermindert. Oft werden in einer Häckselkette die unterschiedlichsten Transportwagen verwendet und jeder Schlepperfahrer hat seinen eigenen, ihm liebsten Sicherheitsabstand zum Feldhäcksler. Das verschiebbare zweite Element kann diese unterschiedlichen Abstände ausgleichen. Bei Arbeiten am Hang und bei Nässe rutschen die Transportwagen häufig leicht hangabwärts. Auch diese Abstandsänderungen zum Feldhäcksler lassen sich durch die verstellbare Austrageinrichtung ausgleichen. Beim Häckseln mit vom Feldhäcksler gezogenen Transportanhängern können Windverluste vermieden werden, indem das auslassseitige Ende der Austrageinrichtung näher an den Transportwagen herangeführt wird. Auch hier ist ein besseres Anpassen an Transportwagen unterschiedlicher Bauart möglich.

Das zweite Element ist gegenüber dem ersten Element verschiebbar gelagert. Um ein möglichst verschleißarmes Verschieben zu ermöglichen, bietet es sich an, zwischen den beiden Elementen ein Lagerelement anzuordnen, das vorzugsweise aus Kunststoff besteht. Dabei kommen insbesondere Leisten aus UHWM-PE (Polyethylen mit ultrahohem Molekulargewicht) in Frage, das sich durch hervorragende Verschleißfestigkeit und sehr gute Gleiteigenschaften auszeichnet. Es könnten aber auch Wälzlager zwischen dem ersten und dem zweiten Element Verwendung finden.

Insbesondere in der ausgefahrenen Position des zweiten Elements der Austrageinrichtung sind starke Kräfte abzufangen, die durch die Fahrbewegung des Feldhäckslers und durch das vom zweiten Element abgelenkte Erntegut entstehen. Das Abfangen dieser Kräfte erfolgt vorzugsweise über Arme und Rollen, die die Kräfte vom zweiten Element auf das erste Element ableiten. Derartige Arme können auf gegenüber liegenden Seiten des ersten Elements angeordnet werden. Die Drehachsen der Rollen sind zweckmäßigerweise quer zur Verschiebeachse des zweiten Elements orientiert, so dass die Rollen auf der Oberfläche des ersten Elements abrollen können.

In den Zeichnungen ist ein nachfolgend näher beschriebenes Ausführungsbeispiel der Erfindung dargestellt. Es zeigt:
- Fig. 1: einen Feldhäcksler in Seitenansicht und in schematischer Darstellung und
- Fig. 2: eine perspektivische Ansicht des Endbereichs der Austrageinrichtung.

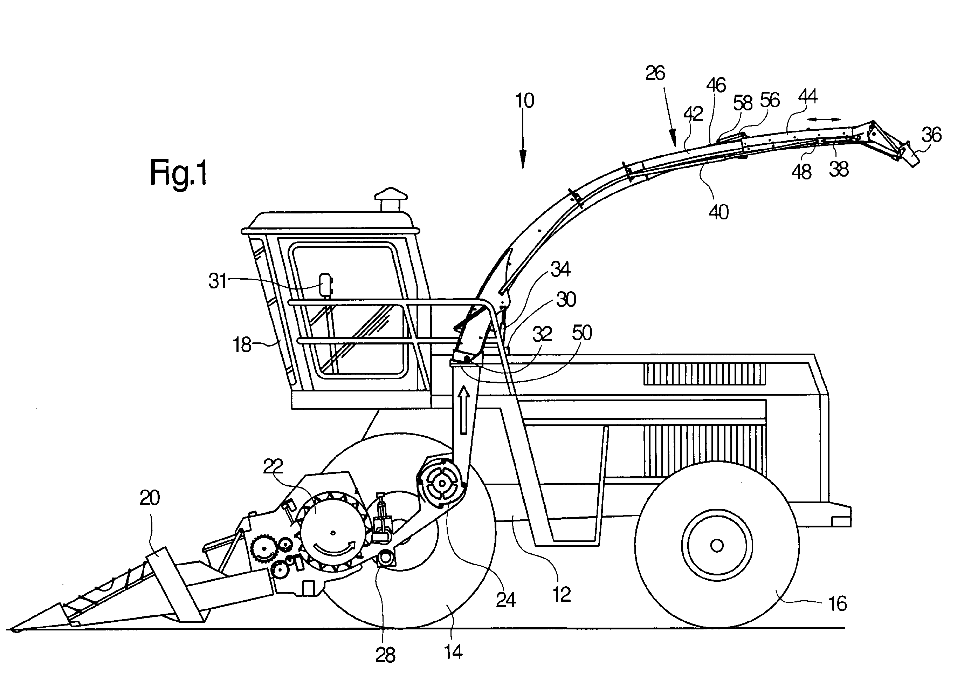

Ein in Figur 1 gezeigter Feldhäcksler 10 baut sich auf einem Rahmen 12 auf, der von vorderen und rückwärtigen Rädern 14 und 16 getragen wird. Die Bedienung des Feldhäckslers 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Transportfahrzeug über eine Austragsvorrichtung 26 in Form eines drehbaren Austragsschachts. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Position der Bestandteile der Austrageinrichtung 26 kann durch durch Aktoren 30, 34, 38 und 40 verändert werden. Ein erster Aktor 30 in Form eines Hydraulikmotors dient zur Drehung der an einem Drehkranz 50 um die vertikale Achse drehbar am Rahmen 12 gelagerten Austrageinrichtung 26. Der Aktor 30 ermöglicht es, die Austrageinrichtung 26 nach hinten in die in Figur 1 dargestellte Transportposition zu drehen, oder sie links oder rechts neben die Erntemaschine 10 zu verbringen. Ein zweiter Aktor 34 in Form eines Hydraulikzylinders ist eingerichtet, die Austrageinrichtung 26 um eine an ihrem stromauf liegenden Ende liegende, horizontale Achse 32 zu verschwenken. Der zweite Aktor 34 definiert somit die Höhe des stromab liegenden Endes der Austragseinrichtung 26. Ein dritter Aktor 38 in Form eines Hydraulikzylinders dient zur Verschwenkung einer Auswurfklappe 36 am auslassseitigen Ende eines zweiten Elements 44 der Austragseinrichtung 26. Die verstellbare Auswurfklappe 36 ermöglicht, den Winkel einzustellen, unter dem das geerntete Gut die Austragseinrichtung 26 verlässt. Die Aktoren 34 und 38 sind einfach oder doppelt wirkende Hydraulikzylinder, wobei bei einfach wirkenden Hydraulikzylindern die Eigengewichte der Austrageinrichtung 26 bzw. der Auswurfklappe 36 die Rückbewegung ermöglichen. In der dargestellten Ausführungsform ist der Aktor 34 einfach und der Aktor 38 doppelt wirkend. Der Aktor 30 kann die Austragseinrichtung 26 im Uhrzeigersinn und (zeitlich daran anschließend) im Gegenuhrzeigersinn drehen. Der Aktor 40 ist ein doppelt wirkender Hydraulikzylinder. Die Aktoren 30, 34, 38 und 40 können mittels einer an einem Fahrhebel angebrachten Eingabeeinrichtung 31 angesteuert werden, die sich in der Fahrerkabine 18 befindet.

Die Austrageinrichtung 26 ist aus einem ersten Element 42 und einem zweiten Element 44 aufgebaut. Das erste Element 42 ist (um die vertikale Achse am Drehkranz 50 drehbar) am Rahmen 12 befestigt. Am stromab liegenden Ende des ersten Elements 42 ist auf das erste Element 42 das zweite Element 44 aufgeschoben. Das zweite Element 44 ist gegenüber dem ersten Element 42 durch den Aktor 40 in axialer Richtung verschiebbar, um den Abstand zwischen dem auslassseitigen Ende des zweiten Elements 44 und der vertikalen Drehachse der Austrageinrichtung 26 während des Betriebs der Erntemaschine 10 variieren zu können, wie durch den Pfeil in der Figur 1 angedeutet. Das Gehäuse des Aktors 40 ist mit dem ersten Element 42 verbunden und seine Kolbenstange über ein Anschlusselement 48 mit dem zweiten Element 44. Oberhalb des ersten Elements 44 erstrecken sich zwischen dem ersten Element 42 und dem zweiten Element 44 Lagerungselemente 46 aus UHWM-PE, die am ersten Element 42 befestigt sind.

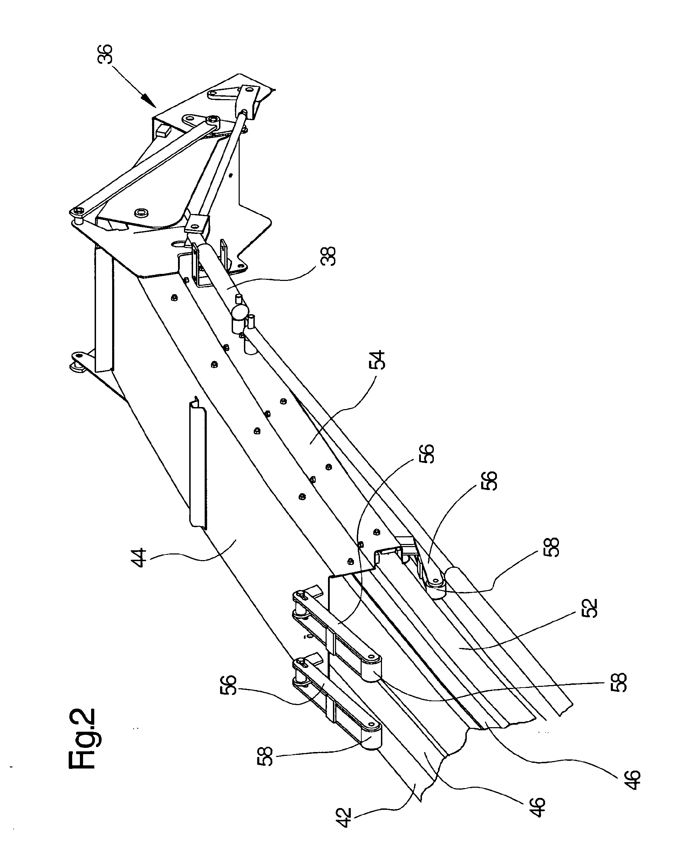

Die in Figur 2 wiedergegebene perspektivische Ansicht der Austrageinrichtung 26 lässt die Art und Weise der Befestigung des zweiten Elements 44 am ersten Element 42 noch besser erkennen. Das erste Element 42 ist an seiner Seitenwand mit einem überstehenden Kanalelement 52 rechteckigen Querschnitts versehen. Im Innenraum des Kanalelements 52 befindet sich ein Kanal, in dem ein Kabel verlegt ist, das zu einer am äußeren Ende des zweiten Elements 44 angeordneten Lampe führt. Oberhalb des Kanalelements 52 ist ebenfalls ein Lagerungselement 46 aus UHWM-PE mit dem ersten Element 42 verbunden, insbesondere verklebt. Das Lagerungselement 46 kann sich auch um das Kanalelement 52 herum erstrecken, bzw. mehrere Streifen umfassen, die unterhalb, seitlich und oberhalb des Kanalelements 52 angeordnet sind. Anhand der Figur 2 ist nicht erkennbar, dass auch auf der anderen Seite des ersten Elements 42 ein gleichartiges Kanalelement 52 und ein gleichartiges Lagerungselement 46 angeordnet sind. Die Lagerungselemente 46 erstrecken sich bis zum äußeren Ende des ersten Elements 42.

Das zweite Element 44 weist einen inneren Querschnitt auf, der geringfügig größer ist als der äußere Querschnitt des ersten Elements 42. An seiner Seitenwand befindet sich ein rechteckförmiger Kanal 54, in dem das Kanalelement 52 des ersten Elements 42 aufgenommen ist. An seinem auf das erste Element 42 aufgeschobenen Ende ist das zweite Element 44 mit vier Stützlagern versehen, die jeweils einen starr mit dem zweiten Element 44 verbundenen Arm 56 und eine am äußeren Ende des Arms 56 angeordnete, um ihre Achse drehbare Rolle 58 umfassen. Zwei Arme 56 mit Rollen 58 sind nebeneinander an der Oberseite des ersten Elements 42 angeordnet; ihre Rollen 58 liegen auf der Oberseite des ersten Elements 42 auf. Zwischen den Rollen 58 liegt ein Lagerungselement 46. Es wäre aber auch die Verwendung eines breiteren Lagerungselements 46 denkbar, auf dem die Rollen 58 abrollen. Die anderen beiden Stützlager umfassen Arme 56, die an der Unterseite je eines Kanals 54 angebracht sind. Ihre Rollen 58 liegen an der Unterseite je eines Kanalelements 52 des ersten Elements 42 an. Die Rollen 58 sind um ihre quer zur Verschieberichtung des zweiten Elements 44 orientierten Längsachsen drehbar an den Armen 56 angelenkt. Obwohl die Arme 56 starr mit dem zweiten Element 44 verbunden sind, wäre es auch denkbar, sie schwenkbar daran anzulenken und mit der Kraft einer Feder gegen das erste Element 42 vorzuspannen.

Das erste Element 42 und das zweite Element 44 sind nach unten offen, da das gehäckselte Erntegut durch die Fliehkraft an der Oberseite der Elemente 42, 44 der Austrageinrichtung 26 entlang gleitet. Es wären aber auch zumindest teilweise nach unten geschlossene Ausführungsformen denkbar.

## Patentansprüche

1. Feldhäcksler (10) mit einer Erntegutaufnahmevorrichtung (20), einer Häckseltrommel (22) und einer Austrageinrichtung (26), über die im Betrieb mittels der Häckseltrommel (22) gehäckseltes Erntegut den Feldhäcksler (10) zu einem nebenher fahrenden Transportfahrzeug verlässt und an deren Oberseite das gehäckselte Erntegut im Betrieb durch die Fliehkraft entlanggleitet, **dadurch gekennzeichnet, dass** die Austrageinrichtung (26) ein erstes, mit dem Feldhäcksler (10) verbundenes Element (42) und ein zweites, das auslassseitige Ende der Austrageinrichtung (26) umfassendes Element (44) aufweist, das während des Betriebs des Feldhäckslers (10) gegenüber dem ersten Element (42) verschiebbar ist, dass ein Aktor (40) zur Verschiebung des zweiten Elements (44) vorgesehen ist, und dass der Aktor (40) durch eine von einem Arbeitsplatz eines Bedieners aus betätigbare Eingabeeinrichtung (31) und/oder selbsttätig steuerbar ist.

2. Feldhäcksler (10) nach Anspruch 1, **gekennzeichnet durch** ein zwischen dem ersten Element (42) und dem zweiten Element (44) angeordnetes Lagerelement (46) aus Kunststoff, insbesondere UHWM-PE.

3. Feldhäcksler (10) nach Anspruch 1 oder 2, **dadurch gekennzeichnet, dass** am zweiten Element (44) ein erstes Ende eines Arms (56) befestigt ist, an dessen zweitem Ende eine Rolle (58) angebracht ist, die am ersten Element (42) anliegt.

4. Feldhäcksler (10) nach Anspruch 3, **dadurch gekennzeichnet, dass** Arme (56) mit Rollen (58) an gegenüberliegenden Seiten des ersten Elements (42) angeordnet sind.

## Claims

1. Forage harvester (10) comprising a crop collecting device (20), a forage chopping cylinder (22) and a discharge device (26), via which, during operation, by means of the forage chopping cylinder (22) chopped crops leave the forage harvester (10) for a transport vehicle driving alongside, and along the upper face thereof, during operation, the chopped crops are conveyed by the centrifugal force, **characterized in that** the discharge device (26) comprises a first element (42) connected to the forage harvester (10) and a second element (44) encompassing the end of the discharge device (26) on the outlet side which, during the operation of the forage harvester (10), may be displaced relative to the first element (42), that an actuator (40) is provided for displacing the second element (44) and that the actuator (40) may be controlled by an input device (31) which may be actuated from a work station of an operator and/or automatically.

2. Forage harvester (10) according to Claim 1, **characterized by** a bearing element (46) made of plastics, in particular UHMW-PE, arranged between the first element (42) and the second element (44).

3. Forage harvester (10) according to Claim 1 or 2, **characterized in that** on the second element (44) a first end of an arm (56) is fastened, on the second end thereof a roller (58) being attached which bears against the first element (42).

4. Forage harvester (10) according to Claim 3, **characterized in that** arms (56) with rollers (58) are arranged on opposing sides of the first element (42).

## Revendications

1. Ensileuse (10) comportant un dispositif de ramassage de la récolte (20), un tambour de hachage (22) et un dispositif de déchargement (26), par l'intermédiaire duquel les végétaux hachés en cours de service par le tambour de hachage (22) sont déversés de l'ensileuse (10) dans un véhicule de transport roulant à côté de celle-ci, et le long du côté supérieur duquel les végétaux hachés en cours de service glissent sous l'effet de la force de gravité, **caractérisée en ce que** le dispositif de déchargement (26) comporte un premier élément (42) relié à l'ensileuse (10), et un deuxième élément (44), qui comporte l'extrémité du côté sortie du dispositif de déchargement (26) et qui, en cours de service de l'ensileuse (10), est mobile par rapport au premier élément (42), **en ce qu'**un actionneur (40) est prévu pour le déplacement du deuxième élément (44), et **en ce que** l'actionneur (40) peut être commandé par un dispositif d'entrée (31), apte à être actionné à partir du poste de travail d'un utilisateur, et/ou peut être commandé automatiquement.

2. Ensileuse (10) selon la revendication 1, **caractérisée par** un élément d'appui (46), qui est monté entre le premier élément (42) et le deuxième élément (44) et est réalisé en matière plastique, en particulier en polyéthylène à poids moléculaire ultra élevé (UHWM).

3. Ensileuse (10) selon la revendication 1 ou 2, **caractérisée en ce que** sur le deuxième élément (44) est fixée une première extrémité d'un bras (56), contre la deuxième extrémité duquel est monté un rouleau (58), qui est en appui contre le premier élément (42).

4. Ensileuse (10) selon la revendication 3, **caractérisée en ce que** des bras (56) avec des rouleaux (58) sont montés contre des côtés opposés du premier élément (42).
